# EUROPÄISCHE PATENTSCHRIFT

(11) **EP 2 505 398 B1**
(45) Veröffentlichungstag und Bekanntmachung des Hinweises auf die Patenterteilung: **26.03.2014**
(21) Anmeldenummer: 11193804.9
(22) Anmeldetag: 15.12.2011
(51) Int. Cl.: B60J 1/20

(54) **Rollosystem für ein Kraftfahrzeug**
Roller blind system for a motor vehicle
Système de store pour un véhicule automobile

(30) Priorität: 28.03.2011 DE 102011006237
(43) Veröffentlichungstag der Anmeldung: 03.10.2012
(73) Patentinhaber: BOS GmbH & Co. KG, 73760 Ostfildern (DE)
(72) Erfinder: Schlecht, Werner, 71665 Vaihingen/Enz Aurich (DE)
(74) Vertreter: Patentanwälte Ruff, Wilhelm, Beier, Dauster & Partner

(56) Entgegenhaltungen:
- EP-A1- 1 053 898
- EP-A1- 1 389 544
- DE-A1-102009 038 182
- DE-A1-102009 039 307
- US-A- 5 404 926
- US-A- 6 086 133
- US-A1- 2010 013 261

## Beschreibung

Die Erfindung betrifft ein Rollosystem für ein Kraftfahrzeug, insbesondere ein Beschattungs-Rollosystem für ein Seitenfenster eines Kraftfahrzeugs, mit einer drehbar gelagerten Wickelwelle, mit einem auf der Wickelwelle in einem Stauzustand aufgewickelten und zur Einnahme eines Funktionszustandes von der Wickelwelle in eine Abziehrichtung abziehbaren Flächengebilde, mit einer an dem der Wickelwelle abgewandten Ende des Flächengebildes angebrachten Auszugstange und mit einem Führungssystem zur Führung der Auszugschiene.

Gattungsgemäße Rollosysteme sind aus dem Stand der Technik allgemein bekannt. Sie verfügen anders als einfachere Rollosysteme, die im Wesentlichen aus der Wickelwelle und dem Flächengebilde bestehen und deren Auszugstange bei der Überführung in den Funktionszustand nicht geführt ist, über ein Führungssystem, durch welches ein Ende des Flächengebildes mittels der Auszugstange bei der Überführung aus dem Stauzustand in den Funktionszustand geführt wird.

Derartige gattungsgemäße Rollosysteme verfügen zumeist über zwei beidseitig des Flächengebildes angeordnete Führungsschienen, durch die die Auszugstange beidseitig geführt wird.

Aus dem Stand der Technik sind auch Beschattungs-Rollosysteme gattungsgemäßer Art in einer speziellen Ausgestaltung bekannt, bei denen das Flächengebilde lediglich zum Abdecken eines schmalen oberen Streifens eines Seitenfensters ausgebildet ist, um hier eine Blendwirkung durch Sonnenlicht zu vermeiden. Derartige Rollosysteme gibt es auch mit Führungssystemen, die lediglich über eine Führungsschiene verfügen, durch die die Auszugstange einseitig geführt ist. Bei solchen Rollosystemen ist es üblich, dass die Auszugstange derart durch die nur die eine Führungsschiene geführt ist, dass sie jenseits der Beweglichkeit entlang der Führungsschiene keinerlei Freiheitsgrade aufweist, so dass die Ausrichtung der Auszugstange durch deren Position in der Führungsschiene vollständig beschrieben ist.

Dokument US 5 404 926 beschreibt ein Rollosystemen gemäß dem Oberbegriff des Anspruchs 1.

### Aufgabe und Lösung

Aufgabe der Erfindung ist es, ein konstruktiv vergleichsweise einfaches Rollosystem zur Verfügung zu stellen, welches auch zur Beschattung größerer Flächen, insbesondere ganzer Seitenfenster, geeignet ist und welches unanfällig gegen Beschädigungen ist.

Diese Aufgabe wird erfindungsgemäß durch ein Rollosystem gemäß Anspruch 1 gelöst.

Bei einem erfindungsgemäßen Rollosystem ist somit vorgesehen, dass die Auszugstange lediglich an einem Ende, im Falle eines Rollosystems mit einem im Funktionszustand etwa vertikal ausgerichteten Flächengebilde vorzugsweise am oberen Ende, durch eine Führungsschiene geführt ist, während zumindest bei der Überführung vom Stauzustand in den Funktionszustand das gegenüberliegende Ende nicht geführt ist. Um jedoch insbesondere auch eine manuelle Überführung in den Funktionszustand zu erlauben, ohne dass hierfür zur Vermeidung eines Verkantens die Auszugstange genau geführt werden muss, ist vorgesehen, dass die Auszugstange gegenüber der Führungsschiene schwenkbeweglich ist. Unter einer solchen erfindungsgemäß vorgesehenen Schwenkbeweglichkeit wird verstanden, dass für eine definierte Position des ersten Endes der Auszugstange in der Führungsschiene eine freie Schwenkbeweglichkeit des gegenüberliegenden Endes in zumindest einer Schwenkebene gegeben ist. Dies gestattet ist, die Auszugstange während der Überführung des Flächengebildes in seinen Funktionszustand leicht anzuwinkeln, was eine Überführung vereinfachen kann und Beschädigungen der Auszugstange und/oder der Führungsschiene entgegenwirkt.

Die Schwenkbeweglichkeit kann so gestaltet sein, dass die Auszugstange als Ganzes, also alle entlang der Führungsschiene beweglichen Teile der Auszugstange, gegenüber der Auszugstange verschwenkt werden. Dies ist beispielsweise durch eine Auszugstange realisierbar, die einen kugelförmigen oder kugelkalottenförmigen Gleitabschnitt aufweist, der in die Führungsschiene hineinragt und innerhalb dieser zumindest begrenzt drehbeweglich ist. Es ist jedoch auch möglich, die Auszugstange so auszugestalten, dass von dieser nur ein Schwenkabschnitt verschwenkbar ist, während ein Führungsabschnitt, der in die Führungsschiene hineinragt, lediglich entlang dieser beweglich ist, selbst jedoch nicht schwenkbeweglich gegenüber der Führungsschiene ist. Zwischen dem Führungsabschnitt und dem Schwenkabschnitt ist in diesem Fall das die Schwenkbeweglichkeit herstellende Gelenk vorgesehen. Vorzugsweise ist dieses Gelenk außerhalb der Führungsschiene angeordnet, durch die der Führungsabschnitt geführt ist.

Auch ist eine Mischform möglich, bei der das Verschwenken der Auszugstange in einer Ebene, insbesondere der Ebene des Flächengebildes im Funktionszustand, als Ganzes möglich ist, während ein Herausschwenken der Auszugstange aus dieser Ebene lediglich mit dem Schwenkabschnitt und gegenüber dem in die Führungsschiene eingreifenden Führungsabschnitt möglich ist.

Die Schwenkbeweglichkeit eines Schwenkabschnitts der Auszugstange gegenüber einem von der Führungsschiene vollständig oder zumindest in höherem Maße geführten Führungsabschnitt ist erzielbar, wenn dieser Abschnitt mit dem Schwenkabschnitt durch eine Gelenkverbindung verbunden ist. Hierbei kann es sich um ein eindeutig definiertes Schwenkgelenk mit in sich starren und gegeneinander drehbeweglichen Komponenten handeln. Von Vorteil ist aufgrund der baulichen Einfachheit jedoch das Vorsehen eines in sich verformbaren elastisch verformbaren Abschnitts zwischen dem geführten Abschnitt und dem Schwenkabschnitt. Dieser kann beispielsweise aus einem Elastomerwerkstoff bestehen.

Die Schwenkbeweglichkeit des Schwenkabschnitts der Auszugstange oder der Auszugstange als Ganzes beträgt vorzugsweise mindestens 30°, insbesondere vorzugsweise mindestens 45°, zwischen zwei entgegengesetzten Schwenkendstellungen. Diese Beweglichkeit ist vorzugsweise bei einem Verschwenken der Auszugstange in der Ebene des Flächengebildes im Funktionszustand und/oder orthogonal hierzu vorgesehen. Weiterhin ist die Schwenkbeweglichkeit der Auszugstange in einer Ebene orthogonal zum Flächengebilde in seinem Funktionszustand gegenüber der Ebene des Flächengebildes in seinem Funktionszustand vorzugsweise mindestens 15°, insbesondere vorzugsweise mindestens 25°. Besonders von Vorteil ist es, wenn diese Schwenkbeweglichkeit gegenüber der Ebene des Flächengebildes in seinem Funktionszustand mindestens 35° beträgt.

Das System ist dafür ausgebildet, die genannten Schwenkbeweglichkeiten zu gestatten, ohne dass hierdurch eine Beschädigung der Führungsschiene oder des Führungsabschnitts der Auszugstange eintritt.

Neben dem Vorteil der erfindungsgemäßen Gestaltung, der sich im Hinblick auf die manuelle Überführung des Flächengebildes in seinen Funktionszustand ergibt, ist die erfindungsgemäße Gestaltung insbesondere auch für Rollos von Vorteil, bei denen bestimmungsgemäß eine nicht rechteckige Fläche abgedeckt werden soll, wobei die Ausrichtung der Auszugstange im Stauzustand des Flächengebildes und im Funktionszustand des Flächengebildes gegeneinander angewinkelt ist. Die bestimmungsgemäße Position und Ausrichtung der Auszugstange im Funktionszustand ist vorzugsweise durch eine Befestigungseinrichtung definiert, an der die Auszugstange bei abgerolltem Flächengebilde befestigt werden kann.

Insbesondere bei einer solchen Gestaltung mit bestimmungsgemäßer Verkippung der Auszugstange wird durch die Schwenkbeweglichkeit eine konstruktiv einfache Möglichkeit zur Verfügung gestellt, um während der Überführung des Flächengebildes in den Funktionszustand den Schwenkwinkel der Auszugstange gegenüber der Führungsschiene zu verändern. Eine solche Notwendigkeit kann sich beispielsweise bei einem Seitenfenster ergeben, dessen nach vorne weisende Seitenkante, beispielsweise im Bereich einer Fahrzeug-B-Säule, in etwa vertikal ist und dessen nach hinten weisende Seitenkante, beispielsweise im Bereich einer Fahrzeug-C-Säule, demgegenüber angewinkelt ist.

Um auch bei der Verwendung eines im Wesentlichen unelastischen Flächengebildes eine solche von der Rechteckform abweichende Fläche unter gleichzeitiger Abwinkelung der Auszugstange abdecken zu können, ist es von Vorteil, wenn die Wickelwelle eine besondere Funktionsweise erhält.

Eine Möglichkeit hierzu besteht darin, die Wickelwelle konisch auszugestalten, wobei dies durch eine in sich konische Welle oder auch durch das Aufbringen einer die Konizität herstellenden Schicht auf einer zuvor zylindrischen Basiswelle erreichbar ist. Ein auf der konischen Wickelwelle aufgewickeltes Flächengebilde wird beim Abwickeln an einer Seitenkante bezüglich der Kantenstrecke weiter abgewickelt als an der gegenüberliegenden Seite. Die schwenkbar an der Führungsschiene angelenkte Auszugstange gestattet es, in hieran angepasste Maße mitgeschwenkt zu werden, so dass eine exakt angepasste Formgebung der Führungsschiene nicht erforderlich ist.

Eine hierzu alternative Ausgestaltung der Wickelwelle sieht vor, dass diese gegenüber einer Ruhelage, die sie beim Vorliegen des Stauzustandes des Flächengebildes einnimmt, in einer Funktionslage verschwenkbar ausgebildet ist, wobei die Verschwenkbarkeit dergestalt ist, dass die Drehachse der Wickelwelle beim Übergang von der Ruhelage in die Funktionslage verkippt wird. Bei einer solchen Gestaltung ist zur Abdeckung einer nicht-rechteckigen Fläche vorgesehen, dass die Wickelwelle vorzugsweise etwa um jenes Maß verschwenkbar ist, um das die Auszugstange zwischen dem Stauzustand und dem Funktionszustand an den gegenüberliegenden Kanten des Flächengebildes um unterschiedliche Strecken bewegt wird. Die Wickelwelle ist daher vorzugsweise an jener Seite schwenkbar gelagert, an der eine geringere Verlagerung der Auszugstange zwischen dem Stauzustand und dem Funktionszustand vorgesehen ist. An der gegenüberliegenden Kante, an der eine Verlagerung in höherem Maße stattfindet, erlaubt die Schwenkbeweglichkeit die gewünschte Kompensation.

Die schwenkbare Wickelwelle ist vorzugsweise mittels einer Feder vorgespannt, so dass sie beim Abziehen des Flächengebildes gegen die Kraft dieser Feder verschwenkt wird. Vorzugsweise sind eine der Wickelwelle zugeordnete Wickelfeder, die das Flächengebilde in einer Aufwickelrichtung kraftbeaufschlagt, und die der Wickelwelle im Hinblick auf ihre Verschwenkbarkeit zugeordnete Feder derart aufeinander abgestimmt, dass bei der Überführung des Flächengebildes aus dem Stauzustand in den Funktionszustand kontinuierlich die Auslenkung der Wickelwelle um ihre Schwenkachse erfolgt.

Eine erfindungsgemäße gegenüber der Führungsschiene schwenkbare Auszugstange kann auch zweckmäßig sein, wenn die Führungsschiene gekrümmt ausgebildet ist. Eine Krümmung der Führungsschiene kann sich beispielsweise durch die Formgebung einer Tür, an der das Rollosystem vorgesehen ist, zwingend ergeben. So kann eine solche Führungsschiene beispielsweise bei einem als Beschattungssystem für ein Seitenfenster einer hinteren Fahrzeugtür von einem in Fahrzeuglängsrichtung nach vorne weisenden Ende aus nach hinten in gekrümmter Form abfallen. Die gegenüber der Führungsschiene schwenkbare Auszugstange gestattet es in diesem Falle, diese Krümmung der Führungsschiene zu kompensieren und ausgehend vom Stauzustand bei der Überführung in den Funktionszustand die absolute Ausrichtung der Auszugstange trotz der Krümmung der Führungsschiene auszugleichen.

Insbesondere in einem solchen Kontext ist es von Vorteil, wenn die Auszugstange teleskopierbar ausgebildet ist, um neben der Krümmung der Führungsschiene auch deren dadurch bedingten und sich in Auszugrichtung ändernden Abstand zum Flächengebilde in dessen Funktionszustand zu kompensieren. Die mindestens zwei gegeneinander teleskopierbaren Glieder sind vorzugsweise zwischen dem ersten Ende der Auszugstange und dem an der Auszugstange angebrachten Flächengebilde vorzusehen.

Die Erfindung betrifft weiterhin eine Fahrzeugseitentür mit einer Fensteröffnung und einem Beschattungssystem zum zumindest teilweisen Abdecken der Fensteröffnung, bei dem das Beschattungssystem als Rollosystem oben beschriebener Art ausgebildet ist.

Des Weiteren betrifft die Erfindung ein Kraftfahrzeug mit einem Rollosystem, bei dem das Rollosystem nach oben beschriebener Art ausgebildet ist. Neben der Verwendung eines solchen Rollosystems in Form eines Beschattungs-Rollosystems in einem Kraftfahrzeug sind auch die Anwendungszwecke des Laderaumabdeckungs-Rollosystems oder des Trennnetz-Rollosystems im Fahrzeug denkbar.

### Kurzbeschreibung der Zeichnungen

Weitere Vorteile und Aspekte der Erfindung ergeben sich außer aus den Ansprüchen auch aus der nachfolgenden Beschreibung von drei Ausführungsbeispielen der Erfindung, welche nachfolgend erläutert sind. Dabei zeigen:
- Fig. 1a bis 1d: eine erste Ausgestaltung eines erfindungsgemäßen Rollosystems,
- Fig. 2a und 2b: eine zweite Ausgestaltung eines erfindungsgemäßen Rollosystems und
- Fig. 3a und 3b: eine dritte Ausgestaltung eines erfindungsgemäßen Rollosystems.

### Detaillierte Beschreibung der Ausführungsbeispiele

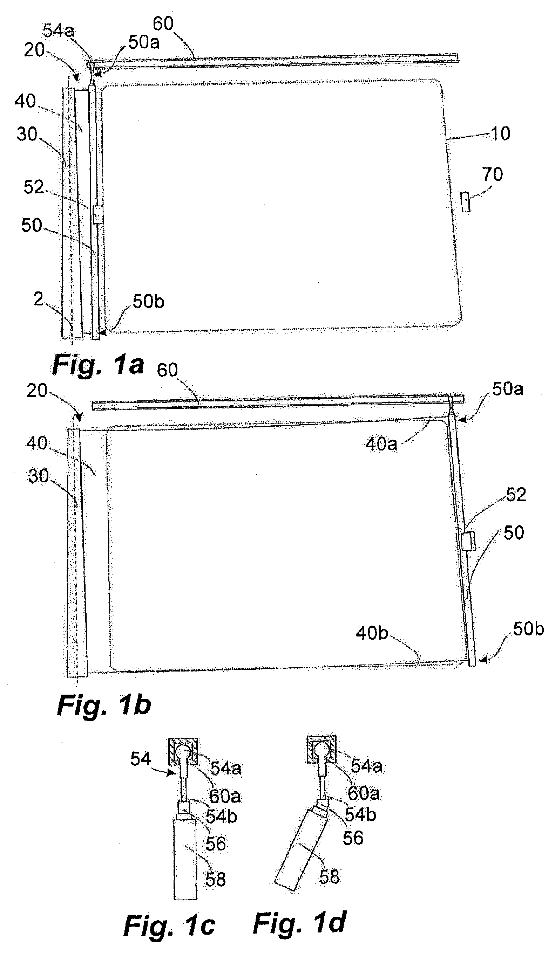

Die Fig. 1a bis 1d zeigen eine erste Ausführungsform eines erfindungsgemäßen Rollosystems. Dabei zeigen die Fig. 1a und 1b das Rollosystem in seiner Gesamtheit in einem Stauzustand sowie einem Nutzzustand.

Das erfindungsgemäße Rollosystem der Fig. 1a und 1b dient der Abdeckung einer gestrichelt dargestellten Fläche 10, bei der es sich vorliegend um eine Seitenscheibe eines Kraftfahrzeugs handelt. Das Rollosystem 20 umfasst eine um eine Drehachse 2 drehbare und mittels einer nicht dargestellten Wickelfeder spannbare Wickelwelle 30, ein auf der Wickelwelle aufwickelbares und von der Wickelwelle abwickelbares Flächengebilde 40 und eine am der Wickelwelle 30 abgewandten Ende des Flächengebildes 40 angeordnete Auszugstange 50. Diese Auszugstange 50 kann durch einen Benutzer ergriffen werden, um das Flächengebilde 40 von der Wickelwelle 30 gegen die Kraft einer nicht dargestellten Wickelfeder abzuziehen bzw. um das Flächengebilde 40 durch Zurückführen der Auszugstange 50 auf der Wickelwelle 30 aufzuwickeln. Zur Fixierung im Funktionszustand mit abgewickeltem Flächengebilde 40 ist an der Auszugstange eine Kopplungseinrichtung 52 und auf der gegenüberliegenden Seite der Fensterfläche 10 eine hiermit zusammenwirkende Kopplungseinrichtung 70 vorgesehen.

Zur Führung der Auszugstange 50 ist eine im Falle des Ausführungsbeispiels der Fig. 1a bis 1d geradlinig ausgebildete Führungsschiene 60 vorgesehen, durch die ein oberes Ende 50a der Auszugstange 50 geführt wird. An diesem oberen Ende ist ein Kugelkopf 54a vorgesehen, der durch einen in Fig. 1c und 1d gut erkennbaren Schlitz 60a in die Führungsschiene 60 hineinragt und durch seine Formgebung ein Herausziehen aus der Führungsschiene 60 verhindert. Das gegenüberliegende Ende 50b der Auszugstange 50 ist nicht durch eine Führungsschiene oder dergleichen geführt.

Das Rollosystem ist für eine manuelle Betätigung vorgesehen. Der Benutzer ergreift die Auszugstange 50 im Ruhezustand der Fig. 1a und führt sie gegen die dem Abrollen des Flächengebildes 40 entgegenwirkenden Kraft der Wickefeder nach rechts, bis die Kopplungseinrichtung 52 mit der Kopplungseinrichtung 70 verbunden werden kann. Die Führungsschiene 60 erleichtert dabei die Führung des Flächengebildes 40.

Bei dem vorliegenden Ausführungsbeispiel ist die abzudeckende Fensterfläche 10 nicht rechteckig, sondern weist an ihrem Ende, welches in der Fig. 1a und 1b rechtsseitig dargestellt ist, eine auf der linken Seite nicht vorgesehene Schrägstellung auf. Um hier die Auszugstange 50 schräggestellt anordnen zu können, ist vorgesehen, dass die Wickelwelle 30 als konische Wickelwelle ausgebildet ist, so dass beim Abwickeln des Flächengebildes 40 kein gleichmäßiges Abwickeln des Flächengebildes 40 erfolgt. Stattdessen wird im Bereich der unteren Kante 40b eine längere Kantenstrecke von der Wickelwelle 30 abgewickelt als im Bereich der gegenüberliegenden oberen Kante 40a. Die entsprechend erforderliche Schwenkbeweglichkeit der Auszugstange 50 gegenüber der Führungsschiene 60 kann bereits dadurch erzielt werden, dass der Kugelkopf 54a innerhalb der Führungsschiene 60 aufgrund der Erstreckung des Schlitzes 60a in der Ebene der abzudeckenden Fläche 10 verschwenkbar ist. Wie insbesondere aus Fig. 1c zu ersehen ist, ist am oberen Ende 50a der Auszugstange 50 darüber hinaus eine Teleskopierbarkeit eines Teleskopgliedes 54b gegenüber dem Kugelkopf 54a gegeben.

Um darüber hinaus zu gewährleisten, das der Bediener nicht darauf achten muss, die Auszugstange 50 ausschließlich parallel zur Ebene der Fläche 10 zu bewegen, ist weiterhin eine Schwenkbeweglichkeit orthogonal hierzu vorgesehen. Hierzu schließt sich an einen Führungsabschnitt 54 der Auszugstange 50, der durch den Kugelkopf 54a und das Teleskopglied 54b gebildet wird, ein als Gelenk agierender Elastomerblock 56 an, an dessen gegenüberliegenden Ende der einen Hauptabschnitt der Auszugstange 50 bildende Schwenkabschnitt 58 vorgesehen ist, an welchem das Flächengebilde 40 befestigt ist. Wie sich anhand der Querschnittsdarstellung der Fig. 1c und 1d ersehen lässt, ist eine Schwenkbeweglichkeit der Auszugstange 50 gegenüber der Führungsschiene 60 aufgrund des schmalen Schlitzes 60a nicht durch den Kugelkopf 54a selbst zu leisten. Daher wird über den Elastomerkörper, welcher beispielsweise für eine Schwenkbewegung von mindestens α = 30° ausgebildet sein kann, ermöglicht, die Auszugstange aus der Ebene der abzudeckenden Fläche 10 herauszuschwenken. Dies kann bei der manuellen Überführung der Auszugstange 50 in ihren Funktionszustand zu einer erheblich vereinfachten Bedienung führen.

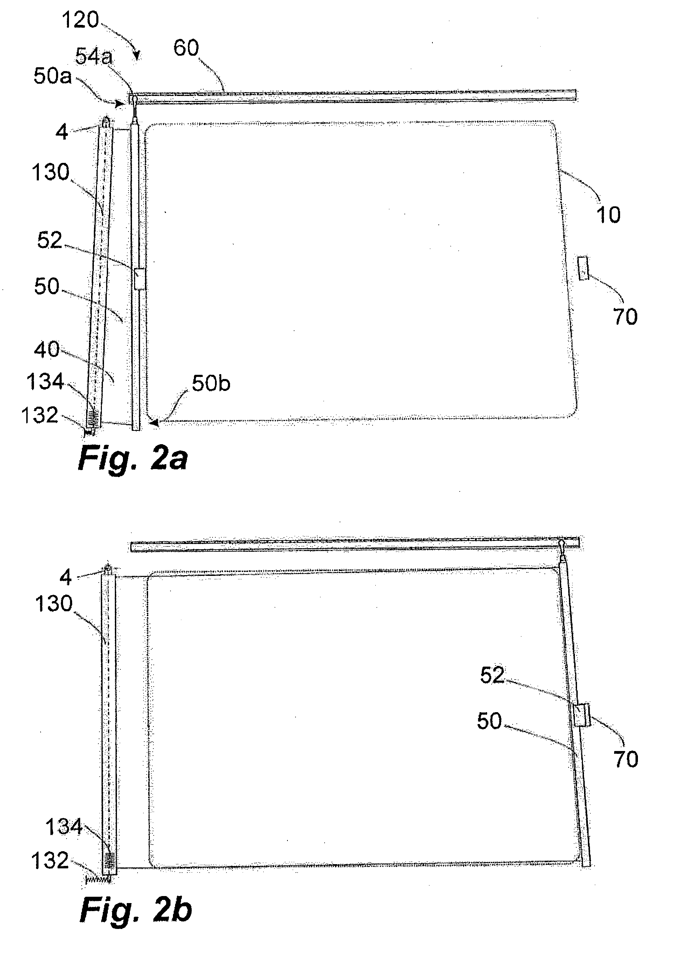

Die Ausgestaltung der Fig. 2a und 2b zeigt eine zu der Ausgestaltung der Fig. 1a bis 1d verwandte Gestaltung. Bei dieser besteht kein Unterschied gegenüber dem ersten Ausführungsbeispiel hinsichtlich der Auszugstange 50, der Führungsschiene 60 und der abzudeckenden Fläche 10. Allerdings ist die Wickelwelle 130 als pendelnde Wickelwelle ausgebildet und hierfür um eine Schwenkachse 4 verschwenkbar. Am gegenüberliegenden unteren Ende der Wickelwelle 130 ist eine Feder 132 vorgesehen, die - bezogen auf die Perspektive der Fig. 2b - eine Schwenkbewegung der Wickelwelle 130 im Uhrzeigersinn zu verursachen sucht.

Wenn bei dieser Gestaltung die Auszugstange 50 aus ihrer Position der Fig. 2a in ihre Position der Fig. 2b bewegt wird, wird dadurch eine Wickelfeder 134 der Wickelwelle 130 gespannt. Dies führt zu einer der Kraft der Feder 132 entgegenwirkende Kraft auf die Wickelwelle 130, die mit zunehmender Auszugslänge des Flächengebildes 140 ansteigt. Hierdurch wird erreicht, dass die Wickelwelle 130 im Funktionszustand der Fig. 2b etwa in gleichem Maße um die Achse 4 verschwenkt ist wie die Auszugstange 150.

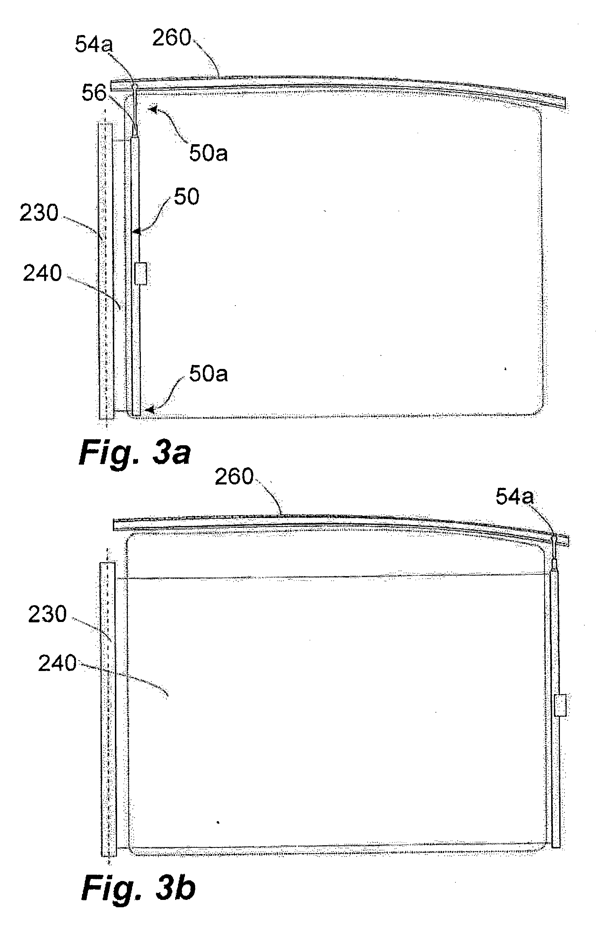

Fig. 3a und 3b zeigen eine weitere Ausführungsform, deren signifikantester Unterschied zu den vorangegangenen Ausführungsform ist, dass die Führungsschiene 260 gekrümmt ausgebildet ist. Wie die Fig. 3a und 3b verdeutlichen, wird das rein linear ausgezogene und in sich rechteckige Flächengebilde 240 mittels einer Auszugstange 50 ausgezogen, die in der schon beschriebenen Art und Weise schwenkbar gegenüber der Führungsschiene 260 ist. Dies gestattet es, die variable Ausrichtung innerhalb der Führungsschiene 260, die sich im Stauzustand der Fig. 3a einerseits und im Nutzzustand der Fig. 3b andererseits ergibt, auszugleichen. Auch die bereits bei den vorangegangenen Ausführungsformen angedeutete Teleskopierbarkeit spielt im Hinblick auf den variablen Abstand zwischen einer oberen Kante 240a des Flächengebildes und der Führungsschiene 260 eine große Rolle.

## Patentansprüche

1. Rollosystem (20; 120; 220) für ein Kraftfahrzeug, insbesondere Beschattungs-Rollosystem für ein Seitenfenster eines Kraftfahrzeugs, mit
- einer drehbar gelagerten Wickelwelle (30; 130; 230),
- einem auf der Wickelwelle in einem Stauzustand aufgewickelten und zur Einnahme eines Funktionszustandes von der Wickelwelle in einer Abziehrichtung abziehbaren Flächengebilde (40),
- einer an dem der Wickelwelle (30; 130; 230) abgewandten Ende des Flächengebildes (40) angebrachten Auszugstange (50) und
- einem Führungssystem (60) zur Führung der Auszugstange (50),
**dadurch gekennzeichnet, dass**
die Auszugsstange (50) ein erstes Ende (50a) und ein gegenüberliegendes zweites Ende (50b) aufweist, wobei lediglich das erste Ende (50a) durch eine Führungsschiene (60) des Führungssystems (60) geführt ist und wobei ein zumindest den überwiegenden Teil der Auszugstange (50) bildender Schwenkabschnitt (58) der Auszugsstange und damit das zweite Ende (50b) der Auszugstange gegenüber der Führungsschiene (60) schwenkbeweglich sind, so dass der Schwenkabschnitt (58) und das zweite Ende (50b) orthogonal zu der Ebene verschwenkt werden können, in der das Flächengebilde (40) im Funktionszustand angeordnet ist.

2. Rollosystem nach Anspruch 1,
**dadurch gekennzeichnet, dass**
die Auszugstange (50) ohne Beschädigung der Führungsschiene (60), die das erste Ende (50a) der Auszugsstange (50) führt, um mindestens 30°, vorzugsweise um mindestens 45° schwenkbar ist.

3. Rollosystem nach Anspruch 1 oder 2,
**dadurch gekennzeichnet, dass**
die Auszugstange (50) ohne Beschädigung der Führungsschiene (60), die das erste Ende (50a) der Auszugsstange (50) führt, um mindestens 15°, vorzugsweise um mindestens 25°, gegenüber der Ebene des Flächengebildes in seinem Funktionszustand in Richtung des Fahrzeuginnenraums verschwenkbar ist.

4. Rollosystem nach einem der vorstehenden Ansprüche,
**dadurch gekennzeichnet, dass**
die Auszugstange (50) zwischen dem Schwenkabschnitt (58) und der Führungsschiene (60) einen im Eingriff mit der Führungsschiene (60) befindlichen Führungsabschnitt (54) aufweist, wobei der Schwenkabschnitt (58) und der Führungsabschnitt (54) zur Herstellung der Schwenkbeweglichkeit durch ein Gelenkmittel (56) schwenkbar, insbesondere elastisch schwenkbar, aneinander angelenkt sind.

5. Rollosystem nach Anspruch 4,
**dadurch gekennzeichnet, dass**
das Gelenkmittel (56) zwischen dem Führungsabschnitt (54) und dem Schwenkabschnitt (58) außerhalb der Führungsschiene (60) angeordnet ist.

6. Rollosystem nach Anspruch 4 oder 5,
**dadurch gekennzeichnet, dass**
das Gelenkmittel als elastisch verformbarer Abschnitt, insbesondere als Elastomerblock, ausgebildet ist.

7. Rollosystem nach einem der vorstehenden Ansprüche,
**dadurch gekennzeichnet, dass**
die Wickelwelle (30) als konische Wickelwelle ausgebildet ist.

8. Rollosystem nach einem der vorstehenden Ansprüche,
**dadurch gekennzeichnet, dass**
die Wickelwelle (130) gegenüber einer Ruhelage bei Vorliegen des Stauzustandes des Flächengebildes in eine Funktionslage verschwenkbar ausgebildet ist, wobei die Verschwenkbarkeit dergestalt ist, dass die Drehachse (2) der Wickelwelle (130) beim Übergang von der Ruhelage in die Funktionslage verkippt wird.

9. Rollosystem nach einem der vorstehenden Ansprüche,
**dadurch gekennzeichnet, dass**
die Führungsschiene (260) gekrümmt ausgebildet ist.

10. Rollosystem nach einem der vorstehenden Ansprüchen,
**dadurch gekennzeichnet, dass**
die Auszugstange (50) teleskopierbar ausgebildet ist.

11. Fahrzeugseitentür mit einer Fensteröffnung (10) und einem Beschattungssystem (20; 120; 220) zum zumindest teilweisen Abdecken der Fensteröffnung (10),
**dadurch gekennzeichnet, dass**
das Beschattungssystem (20; 120; 220) als Rollosystem nach einem der vorliegenden Ansprüchen ausgebildet ist.

12. Kraftfahrzeug mit einem Rollosystem (10; 120; 220), insbesondere einem Beschattungs-Rollosystem, einem Laderaumabdeckungs-Rollosystem oder einem Trennnetz-Rollosystem,
**dadurch gekennzeichnet, dass**
das Rollosystem (10; 120; 220) nach einem der vorliegenden Ansprüchen ausgebildet ist.

## Claims

1. Roller-blind system (20; 120; 220) for a motor vehicle, in particular a shading roller-blind system for a side window of a motor vehicle, having
- a rotatably mounted winding shaft (30; 130; 230),
- a sheet-like structure (40), which is wound up on the winding shaft in a stowage state and can be pulled out from the winding shaft in a pulling-out direction in order to assume a functional state,
- a pull-out rod (50), which is fitted at that end of the sheet-like structure (40) which is directed away from the winding shaft (30; 130; 230), and
- a guide system (60) for guiding the pull-out rod (50),
**characterized in that**
the pull-out rod (50) has a first end (50a) and a second end (50b), which is located opposite, wherein only the first end (50a) is guided by a guide rail (60) of the guide system (60), and wherein a pivoting portion (58) of the pull-out rod that forms at least most of the pull-out rod (50), and thus the second end (50b) of the pull-out rod, are pivotably movable in relation to the guide rail (60), and therefore the pivoting portion (58) and the second end (50b) can be pivoted orthogonally in relation to the plane in which the sheet-like structure (40) is arranged in the functional state.

2. Roller-blind system according to Claim 1,
**characterized in that**
the pull-out rod (50) can be pivoted through at least 30°, preferably through at least 45°, without damage to the guide rail (60), which guides the first end (50a) of the pull-out rod (50).

3. Roller-blind system according to Claim 1 or 2,
**characterized in that**
the pull-out rod (50) can be pivoted in the direction of the vehicle interior through at least 15°, preferably through at least 25°, in relation to the plane of the sheet-like structure in its functional state without damage to the guide rail (60), which guides the first end (50a) of the pull-out rod (50).

4. Roller-blind system according to one of the preceding claims,
**characterized in that**
the pull-out rod (50), between the pivoting portion (58) and the guide rail (60), has a guide portion (54) engaging with the guide rail (60), wherein the pivoting portion (58) and the guide portion (54) are articulated on one another such that they can be pivoted, in particular pivoted elastically, by an articulation means (56) in order to produce the pivoting-movement capability.

5. Roller-blind system according to Claim 4,
**characterized in that**
the articulation means (56) is arranged between the guide portion (54) and the pivoting portion (58), outside the guide rail (60).

6. Roller-blind system according to Claim 4 or 5,
**characterized in that**
the articulation means is designed as an elastically deformable portion, in particular as an elastomer block.

7. Roller-blind system according to one of the preceding claims,
**characterized in that**
the winding shaft (30) is designed as a conical winding shaft.

8. Roller-blind system according to one of the preceding claims,
**characterized in that**
the winding shaft (130) is designed such that it can be pivoted from a rest position, in which the sheet-like structure is in a stowage state, into a functional position, wherein the pivotability is such that the axis of rotation (2) of the winding shaft (130) is tilted during the transition from the rest position into the functional position.

9. Roller-blind system according to one of the preceding claims,
**characterized in that**
the guide rail (260) is of curved design.

10. Roller-blind system according to one of the preceding claims,
**characterized in that**
the pull-out rod (50) is of telescopic design.

11. Vehicle side door having a window opening (10) and a shading system (20; 120; 220) for at least partially covering the window opening (10),
**characterized in that**
the shading system (20; 120; 220) is designed as a roller-blind system according to one of the preceding claims.

12. Motor vehicle having a roller-blind system (20; 120; 220), in particular a shading roller-blind system, a luggage-compartment-cover roller-blind system or a partition-net roller-blind system,
**characterized in that**
the roller-blind system (20; 120; 220) is designed according to one of the preceding claims.

## Revendications

1. Système de store (20; 120; 220) pour un véhicule automobile, en particulier système de store pare-soleil pour une fenêtre latérale d'un véhicule automobile, avec
- un arbre d'enroulement (30; 130; 230) monté de façon rotative;
- un objet plat (40) enroulé sur l'arbre d'enroulement dans un état de rangement et extractible dans une direction d'extraction de l'arbre d'enroulement pour prendre un état fonctionnel,
- une tige d'extraction (50) montée sur l'extrémité de l'objet plat (40) opposée à l'arbre d'enroulement (30; 130; 230), et
- un système de guidage (60) pour le guidage de la tige d'extraction (50),
**caractérisé en ce que** la tige d'extraction (50) présente une première extrémité (50a) et une deuxième extrémité opposée (50b), dans lequel seule la première extrémité (50a) est guidée par un rail de guidage (60) du système de guidage (60) et dans lequel une partie pivotante (58) de la tige d'extraction formant au moins la partie principale de la tige d'extraction (50) et dès lors la deuxième extrémité (50b) de la tige d'extraction sont mobiles de façon pivotante par rapport au rail de guidage (60), de telle manière que la partie pivotante (58) et la deuxième extrémité (50b) puissent pivoter perpendiculairement au plan dans lequel l'objet plat (40) est disposé dans son état fonctionnel.

2. Système de store selon la revendication 1, **caractérisé en ce que** la tige d'extraction (50) peut pivoter d'au moins 30°, de préférence d'au moins 45°, sans endommager le rail de guidage (60), qui guide la première extrémité (50a) de la tige d'extraction (50).

3. Système de store selon la revendication 1 ou 2, **caractérisé en ce que** la tige d'extraction (50) peut pivoter d'au moins 15°, de préférence d'au moins 25°, par rapport au plan de l'objet plat dans son état fonctionnel en direction de l'espace intérieur du véhicule, sans endommager le rail de guidage (60) qui guide la première extrémité (50a) de la tige d'extraction (50).

4. Système de store selon l'une quelconque des revendications précédentes, **caractérisé en ce que** la tige d'extraction (50) présente, entre la partie pivotante (58) et le rail de guidage (60), une partie de guidage (54) qui se trouve en prise avec le rail de guidage (60), dans lequel la partie pivotante (58) et la partie de guidage (54) sont articulées l'une à l'autre de façon pivotante, en particulier de façon élastiquement pivotante, par un moyen d'articulation (56) pour la réalisation de la mobilité de pivotement.

5. Système de store selon la revendication 4, **caractérisé en ce que** le moyen d'articulation (56) est disposé entre la partie de guidage (54) et la partie pivotante (58) à l'extérieur du rail de guidage (60).

6. Système de store selon la revendication 4 ou 5, **caractérisé en ce que** le moyen d'articulation est réalisé sous la forme d'une partie élastiquement déformable, en particulier d'un bloc élastomère.

7. Système de store selon l'une quelconque des revendications précédentes, **caractérisé en ce que** l'arbre d'enroulement (30) est réalisé sous la forme d'un arbre d'enroulement conique.

8. Système de store selon l'une quelconque des revendications précédentes, **caractérisé en ce que** l'arbre d'enroulement (130) est réalisé de façon pivotante dans une position fonctionnelle par rapport à une position de repos lorsqu'il se trouve en état de rangement de l'objet plat, dans lequel la capacité de pivotement est telle que l'axe de rotation (2) de l'arbre d'enroulement (130) bascule lors du passage de la position de repos à la position fonctionnelle.

9. Système de store selon l'une quelconque des revendications précédentes, **caractérisé en ce que** le rail de guidage (260) est réalisé sous forme incurvée.

10. Système de store selon l'une quelconque des revendications précédentes, **caractérisé en ce que** la tige d'extraction (50) est réalisée sous forme télescopique.

11. Porte latérale de véhicule avec une ouverture de fenêtre (10) et un système de pare-soleil (20; 120; 220) pour le recouvrement au moins partiel de l'ouverture de fenêtre (10), **caractérisée en ce que** le système de pare-soleil (20; 120; 220) est réalisé sous la forme d'un système de store selon l'une quelconque des revendications précédentes.

12. Véhicule automobile avec un système de store (20; 120; 220), en particulier un système de store pare-soleil, un système de store recouvrant l'espace de chargement ou un système de store avec filet de séparation, **caractérisé en ce que** le système de store (20; 120; 220) est réalisé selon l'une quelconque des revendications précédentes.
